(19) Europäisches Patentamt
European Patent Office
Office européen des brevets

(11) EP 3 032 649 A1

(12) EUROPEAN PATENT APPLICATION
published in accordance with Art. 153(4) EPC

(43) Date of publication:
15.06.2016 Bulletin 2016/24

(51) Int Cl.:
*H01Q 13/10* (2006.01)     *B65D 75/32* (2006.01)
*G06K 19/00* (2006.01)     *G06K 19/07* (2006.01)
*G06K 19/077* (2006.01)

(21) Application number: 14834293.4

(22) Date of filing: 05.08.2014

(86) International application number:
PCT/JP2014/070601

(87) International publication number:
WO 2015/020042 (12.02.2015 Gazette 2015/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 09.08.2013 JP 2013165927
05.06.2014 JP 2014116932

(71) Applicant: Ricoh Company, Ltd.
Tokyo 143-8555 (JP)

(72) Inventors:
• OKAMOTO, Yoichi
  Tokyo 143-8555 (JP)
• KAWASE, Tsutomu
  Tokyo 143-8555 (JP)

(74) Representative: Schwabe - Sandmair - Marx
Patentanwälte Rechtsanwalt
Partnerschaft mbB
Joseph-Wild-Straße 20
81829 München (DE)

(54) **PACKAGE WITH ATTACHED WIRELESS IC TAG AND MANUFACTURING METHOD FOR PACKAGE WITH ATTACHED WIRELESS IC TAG**

(57) There is provided a package with a radio IC tag includes a package unit including a metal sheet and a resin sheet, the metal sheet having a predetermined slot pattern formed therein; and an IC chip unit including an IC chip and an electrode member, the electrode member supplying electric power to the IC chip. An end of the slot pattern is disposed in a corner field of the package unit.

FIG.1

**Description**

TECHNICAL FIELD

The present invention relates to a package with a radio IC tag and a method for manufacturing a package with a radio IC tag.

BACKGROUND ART

There are radio communication systems that use IC tags capable of radio communication such as Radio Frequency Identification (RFID) and Near Field Communication (NFC) as systems that transmit information in a non-contact manner.
For example, an RFID system generally includes an RFID tag (also called "radio tag") and a reader/writer (RW) device. The RW device reads or writes information from or to the RFID tag via radio communication.
For RFID tags, there are what are called active-type tags that have a battery installed therein and drive with electric power of the battery and what are called passive-type tags that receive electric power from the RW device as a power supply and drive with the electric power. Since the active-type tags have the installed battery in comparison with the passive-type tags, the active-type tags have merits of a communication distance and stability of communication, for example. By contrast, the active-type tags have demerits of an increase in size and a high cost due to a complicated structure.
With the improvement of semiconductor technology in recent years, size reduction and high performance of an IC chip for the passive-type tags have progressed. With the extension of a communication distance and the improvement of communication stability of the IC chip for the passive-type tags, the passive-type tags are expected to be used in wider fields.
For example, use of RFID tags for medicine such as tablets and capsules is desired for control in manufacture, distribution, and sales. Such medicines as tablets and capsules are encapsulated in a package called Press Through Package (PTP) which is a kind of heat-sealing packaging.
In this PTP sheet, one surface is covered with a resin sheet and the other surface is covered with a metal sheet such as aluminum, so that it is impossible to communicate if a general-purpose RFID tag is attached without modification. Accordingly, it is necessary to use a large and expensive RFID tag for metal objects.
In Patent Document 1, an inlet in which an IC chip is installed on a small antenna where an impedance matching circuit (space pattern) is formed is prepared in advance. A radio IC tag is realized by mounting the inlet on an antenna realized in an insular field or a slot formed on an aluminum sheet constituting a PTP sheet.

Related Art Document

Patent Document

Patent Document 1: Japanese Laid-Open Patent Application No. 2007-60407

DISCLOSURE OF THE INVENTION

PROBLEM TO BE SOLVED BY INVENTION

In the technique of Patent Document 1, it is assumed that the radio IC tag uses microwaves in the 2.45 GHz band. A length of the slot of the radio IC tag is $\lambda/2$ (about 50 mm) or $\lambda/4$ (about 25 mm). Accordingly, a size of the inlet and the space pattern where impedance is matched is relatively small.
However, if the radio IC tag is applied to the 900 MHz band (such as the 920 MHz band (915 to 930 MHz) or the 950 MHz band (950 to 958 MHz)) mainly used at present in radio IC tags for the UHF band (300 MHz to 3 GHz, wavelength 10 cm to 1 m), a wavelength $\lambda$ of the radio IC tag becomes 30 cm or more. Accordingly, there is a problem in that if the length of the slot of the radio IC tag is $\lambda/2$, it is difficult to keep it within a size of a PTP sheet for typical tablets (within 90 to 100 mm in a longitudinal direction). Further, if the length of the slot is $\lambda/4$, a communication distance is greatly reduced and there is a problem in that it is impossible to obtain a communication distance that is practically sufficient.
It is an object of an embodiment of the present invention to provide, in a technique of processing a part of a metal foil on the PTP sheet for packaging tablets or the like and using the part as an antenna of the radio IC tag, a package with a radio IC tag capable of stably securing a sufficient communication distance if it is used as a radio IC tag in the UHF band having long wavelengths. Further, it is another object of an embodiment of the present invention to provide a package with a radio IC tag capable of communicating even if a plurality of PTP sheets are collectively housed.

MEANS FOR SOLVING PROBLEM

An embodiment of the present invention provides a package with a radio IC tag. The package with a radio IC tag includes a package unit including a metal sheet and a resin sheet, the metal sheet having a predetermined slot pattern formed therein; and an IC chip unit including an IC chip and an electrode member, the electrode member supplying electric power to the IC chip. An end of the slot pattern is disposed in a corner field of the package unit.

EFFECT OF INVENTION

According to an embodiment of the present invention, even if the package with a radio IC tag is used as a radio IC tag in the UHF band having long wavelengths, for example, the package with a radio IC tag stably secures a sufficient communication distance. Further, according to an embodiment of the present invention, even if PTP sheets are collectively housed, communication is possible.

BRIEF DESCRIPTION OF THE DRAWINGS

Fig. 1 is a top view of a package with a radio IC tag according to a present embodiment;
Fig. 2 is a side cross-sectional view of a package with a radio IC tag according to the present embodiment;
Fig. 3 is a bottom view of a package with a radio IC tag according to the present embodiment;
Fig. 4 (a) - (g) is a diagram showing a slot pattern formed in a PTP sheet;
Fig. 5 is a graph showing a change of frequency characteristics when a slot width of a slot pattern of Fig. 4(g) is changed;
Fig. 6 is an enlarged configuration diagram of an IC chip unit;
Fig. 7 is a cross-sectional configuration diagram of an IC chip unit;
Fig. 8 is a graph showing a change of frequency depending on presence or absence of a protection sheet;
Fig. 9(A) is a perspective view and (B) is a cross-sectional view of a package with a radio IC tag on which a protection sheet having a peeling part is disposed;
Fig. 10 is a top view of a package with a radio IC tag where a notch is formed;
Fig. 11 is a diagram illustrating packages with a radio IC tag housed in a package box;
Fig. 12 is a graph showing a relationship between frequency and communication distance in a case of a single package with a radio IC tag and in a case where an inter-package distance among a plurality of packages with a radio IC tag is changed;
Fig. 13 is a graph showing a peak value of frequency in a single package and different distances among the packages in Fig. 12;
Fig. 14 is an illustration of a manufacturing process of a package with a radio IC tag;
Fig. 15 is an illustration of an evaluation method in Example 1;
Fig. 16 is an illustration of an evaluation method in Example 2; and
Fig. 17 is a graph showing an evaluation result in Example 2.

EMBODIMENTS FOR CARRYING OUT THE INVENTION

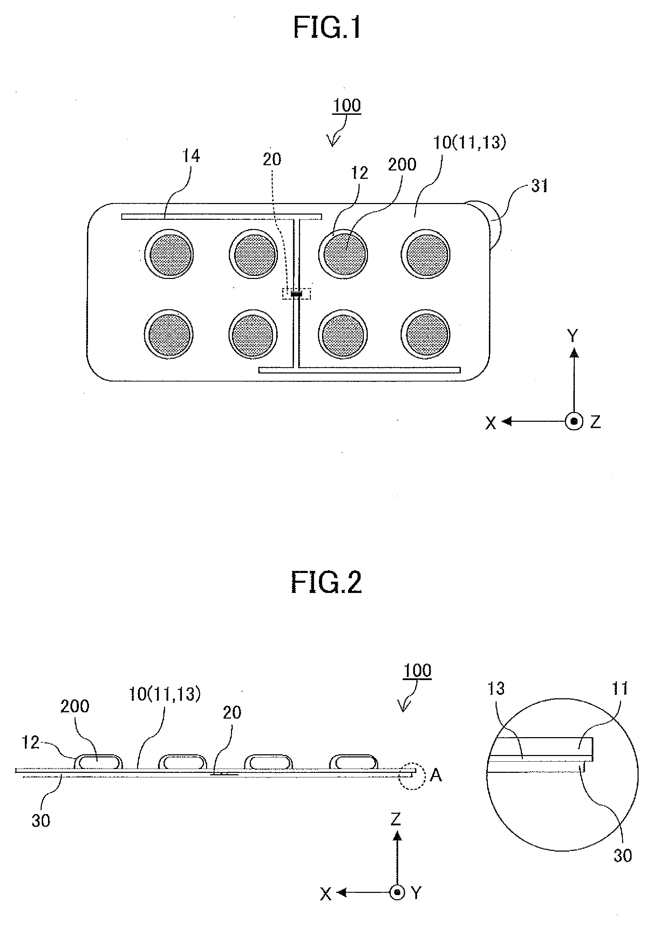

In the following, the present invention will be described in detail based on embodiments shown in Figs. 1-17.
A package 100 with a radio IC tag according to the present embodiment includes a package unit (such as a PTP sheet) 10 having a metal sheet 13 where a predetermined slot pattern 14 is formed as described below and a resin sheet 11, and an IC chip unit 20 having an IC chip 21 and electrode members 22 and 23 that supply electric power to the IC chip 21. In the package 100 with a radio IC tag, an end of the slot pattern 14 is disposed in a corner field of the package unit 10.
In addition, this specification uses an XYZ three-dimensional orthogonal coordinate system, in which a direction orthogonal to a sheet surface of the PTP sheet 10 is a Z axis direction, the sheet surface has a substantially rectangular shape, a longitudinal direction thereof is an X axis direction, and a lateral direction thereof is a Y axis direction.
The package 100 with a radio IC tag according to the present embodiment is capable of communication using radio waves in the Ultra High Frequency (UHF) band (300 MHz to 3 GHz). The package 100 includes a radio IC tag capable of communicating using radio waves that have relatively long wavelengths preferably in what is called the 800 MHz band (770 to 960 MHz) and most preferably in the 900 MHz band (such as the 920 MHz band or the 950 MHz band).

(Configuration of package with radio IC tag)

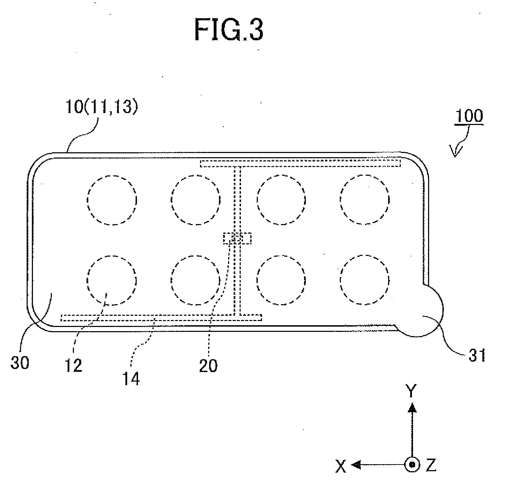

Fig. 1 is a top view of a package with a radio IC tag according to the present embodiment. Fig. 2 is a side cross-sectional view of the package with a radio IC tag and an enlarged view of a dashed line part A. Fig. 3 is a bottom view of the package with a radio IC tag.

As shown in Figs. 1-3, the package 100 with a radio IC tag according to the present embodiment includes the PTP sheet 10 having a substantially rectangular shape in which the slot pattern 14 is formed in the metal sheet (metal foil) 13, the IC chip unit 20 having the IC chip and the two electrode members for electric power supply, and a protection sheet 30 that protects the IC chip unit 20 and the slot pattern 14.

[Package unit]

The PTP sheet 10 functioning as a package unit has a configuration in which the metal sheet 13 is bonded to the resin sheet 11. A tablet 200, for example, is packaged between the resin sheet 11 and the metal sheet 13.

The resin sheet 11 includes a housing portion 12 for housing the tablet 200 or the like. This housing portion 12 has a concave shape such as a groove shape, a dimple shape, or a cavity shape. In addition, a single housing portion 12 may house a plurality of tablets 200. In the present embodiment, polyvinyl chloride (PVC) is used as a material for the resin sheet 11. However, the material is not limited to this. Polyethylene terephthalate (PET), polypropylene (PP), or the like may be used.

The metal sheet 13 is a member for sealing the tablets 200 within corresponding housing portions 12 of the resin sheet 11. In the present embodiment, an aluminum sheet (aluminum foil) is used as the metal sheet 13. However, the metal sheet 13 is not limited to this.

In the PTP sheet 10 configured in this manner, when the housing portion 12 where the tablet 200 is housed is crushed by the finger, a part of the metal sheet 13 that faces the housing portion 12 is broken by the tablet 200, thereby letting out the tablet 200.

In the technique of Patent Document 1 above, a press-cutting mold is used to form a space pattern on a metal foil for aluminum sealing without cutting a PVC base (see Patent Document 1, Fig. 2). However, in this manufacturing method, it is difficult to increase a groove width of the space pattern to be formed in the metal foil and to bring out sufficient antenna performance. Accordingly, there is a problem in that a required communication distance is less likely to be obtained. Further, in this manufacturing method, it is difficult to obtain an accurate groove width, so that unevenness of the antenna performance may be increased.

Accordingly, in the present embodiment, the slot pattern 14 formed in the PTP sheet 10 is obtained by punching or removing the metal sheet 13 with a process such as etching. Further, the slot pattern 14 is shaped in a secondary process where necessary. It is possible to form the slot pattern 14 of any shape with good accuracy by forming the slot pattern 14 through punching and it is possible to form the slot pattern 14 with a shape and a width depending on wavelengths of radio waves in a desired UHF band.

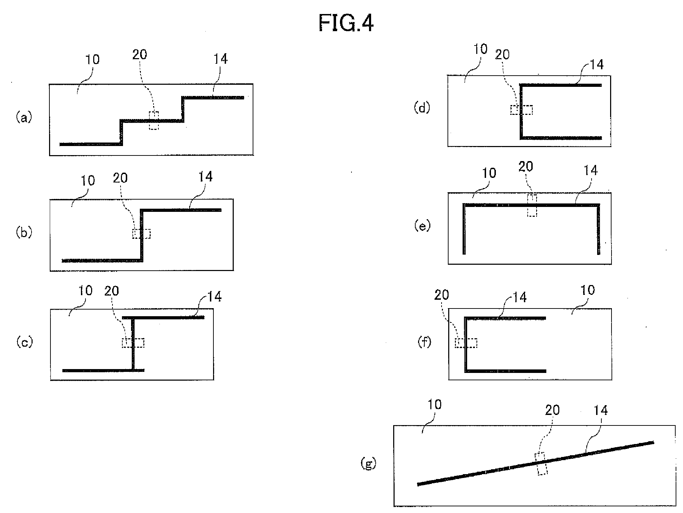

Fig. 4(a)-(g) shows slot patterns 14 formed in the PTP sheet 10. When the PTP sheet 10 having a small size is used as a radio IC tag in the UHF band having long wavelengths, a width (groove width) of a slot in the slot pattern 14 is preferably about 0.5 to 3 mm. More preferably, the width is 2 to 3 mm when frequency of radio waves to be used for radio communication is in the 900 MHz band. This is because if the slot is narrow, a frequency bandwidth becomes narrow and a sufficient communication distance is less likely to be obtained. If the slot is too narrow, it is difficult to obtain a desired width with predetermined accuracy. Further, if the slot is wide, the bandwidth becomes wide but impedance also becomes high, so that a maximum communication distance becomes short.

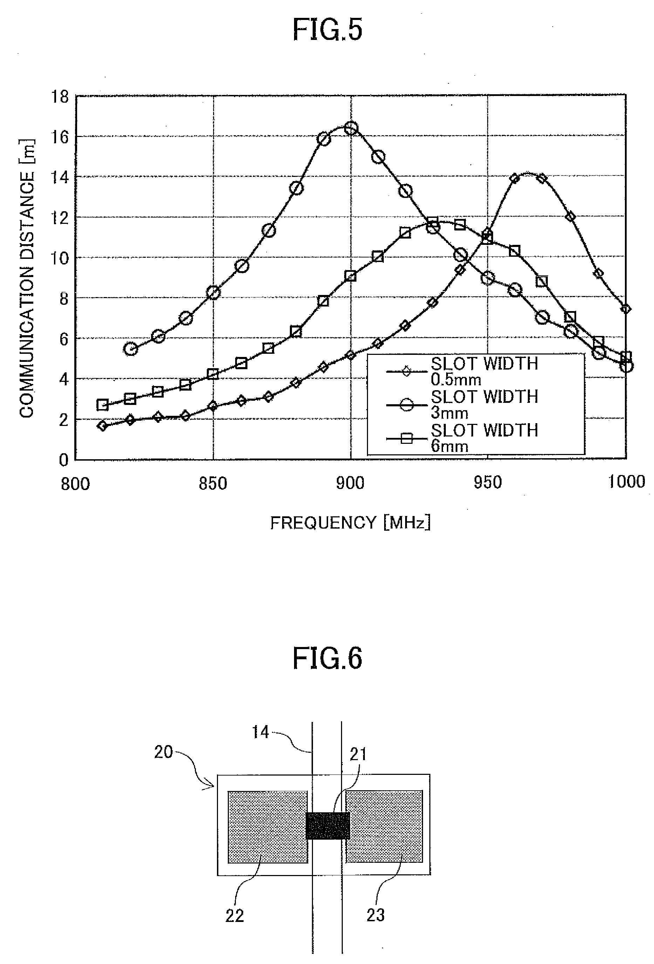

As a specific example, a linear slot pattern 14 as shown in Fig. 4(g) is formed in the PTP sheet 10 that has a size of 140 × 40 mm. Fig. 5 shows a change of characteristics when a width of its slot is changed. From Fig. 5, it is understood that when the width of the slot is 3 mm, a communicating distance (m) is longer on the whole and this is preferable especially in the 900 MHz band.

In addition, in the slot pattern 14 applied to the package 100 with a radio IC tag, both ends of the slot pattern 14 are diagonally positioned in the PTP sheet 10 as shown Fig. 4(g). If both ends are connected using a straight line, the slot pattern 14 overlaps the housing portion 12 and blocks sealing and taking out of the tablet 200. Accordingly, the slot pattern 14 preferably has a shape with a bent part to avoid a location of the housing portion 12 as shown in Fig. 4 (a) - (e).

Further, in the package 100 with a radio IC tag according to the present embodiment, both ends of the slot pattern 14 are disposed in corresponding corner fields of the PTP sheet 10. In this case, the corner fields refer to fields in the vicinity of any of four corners of the PTP sheet 10. For example, the corner fields are formed with an area of about 1/4 of lengths of four sides that form the PTP sheet 10 from each corner.

A shape of the slot pattern 14 shown in Fig. 4(a) is a step-like shape having four bent parts. This slot pattern 14 is preferable if a size of the PTP sheet 10 is relatively large and a communication distance is to be increased.

Further, the slot pattern 14 shown in Fig. 4(b) has a step-like shape having two bent parts. This slot pattern 14 enables communication in the 900 MHz band even if the size of the PTP sheet 10 is smaller than that in Fig. 4(a).

Further, in a shape of the slot pattern 14 shown in Fig. 4(c), a slot in the two bent parts of Fig. 4(b) is somewhat extended in a longitudinal direction of the sheet. In addition, ends of the extended parts need not be present in the corner fields. This slot pattern 14 enables communication in the 900 MHz band even if the size of the PTP sheet 10 is smaller than in Fig. 4(b). Accordingly, the order of sheet sizes is (a) > (b) > (c) as shown in Fig. 4.

Further, the slot pattern 14 shown in Fig. 4(d) is U-shaped. Further, the slot pattern 14 shown in Fig. 4(e) has a gate-like shape. In these shapes, it is possible to adjust an operating frequency by adjusting a length of the slot.

In all the slot patterns 14 shown in Fig. 4(a)-(e), both ends are disposed in the respective corner fields of the PTP sheet 10. By contrast, while the slot pattern 14 shown in Fig. 4(f) is U-shaped in the same manner as in Fig. 4(d), the ends of the slot pattern 14 are not present in the corner fields of the PTP sheet 10. A communicating distance depending on differences of the slot pattern shapes and end locations will be described in Example 1.

[IC chip unit]

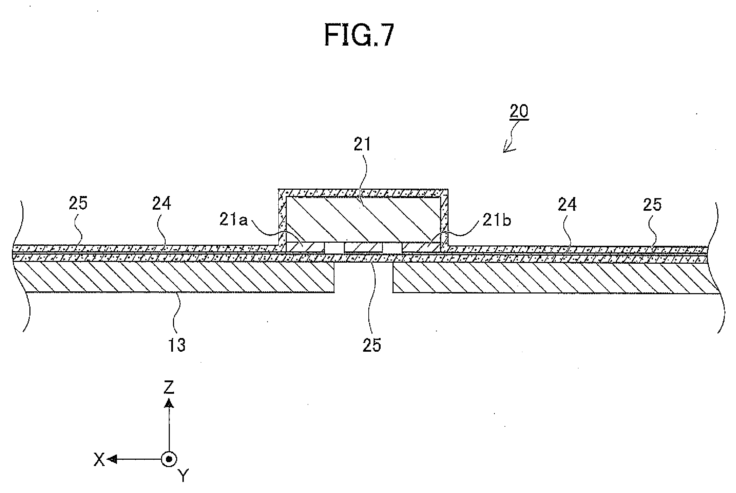

Fig. 6 is an enlarged configuration diagram of the IC chip unit 20. Fig. 7 is a cross-sectional configuration diagram of the IC chip unit 20.

The IC chip unit 20 is a passive-type RFID tag, for example, and includes the IC chip 21 and the two electrode members (terminal members) 22 and 23. The IC chip 21 has a function of radio communication using frequencies in the 900 MHz band. The two electrode members 22 and 23 that supply electric power to the IC chip 21 are disposed in locations across the slot pattern 14 as shown in dashed lines of Figs. 1 to 3. In addition, while the IC chip unit 20 is disposed at a center of the slot pattern 14 in Figs. 1 to 3, a location where the IC chip unit 20 is disposed may be adjusted where necessary depending on impedance or the like of the IC chip unit 20 (Fig. 4 (e), for example).

The IC chip 21 stores a unique ID number, for example. It is possible to read the ID number using a RW device.

In a case of the 900 MHz band, connection between the electrode members 22 and 23 of the IC chip unit 20 and the metal sheet 13 of the PTP sheet 10 may not necessarily require continuity by direct contact, so that operation is possible by capacitive coupling even if a resin film or the like is inserted therebetween.

Each of the electrode members 22 and 23 includes a metal foil 24 and a resin film 25 as an insulator film (insulating member) that is laminated on the metal foil 24 on both surfaces as shown in Fig. 7, for example. An aluminum foil may be used as the metal foil 24.

Further, an area of the metal foil 24 in each of the electrode members 22 and 23 is set such that even if the package 100 with a radio IC tag and the RW device are separated from each other by a predetermined distance, an alternating current of a frequency in the 900 MHz band can pass between the metal foil 24 and the metal sheet 13, and the metal foil 24 is connected to electrodes 21a and 21b of the IC chip 21.

In other words, a distance between the RW device and the radio IC tag where communication is possible is related to, in addition to the shape of the above-mentioned slot pattern, a size (area) of the metal foil 24 in the electrode members 22 and 23, and a thickness of an insulator such as the resin film 25 or an adhesive layer present between the metal foil 24 and the metal sheet 13. Accordingly, it is possible to reduce impedance in electrostatic coupling and increase the distance where communication is possible by adjusting the size (area) of the metal foil 24 depending on the thickness of the insulator.

As shown in Figs. 2 and 6, the electrode members 22 and 23 are attached to $\pm$X sides of the slot pattern 14 in the metal sheet 13.

The metal foil 24 of each of the electrode members 22 and 23 is installed on the metal sheet 13 via the resin film 25. The resin film 25 and the metal sheet 13 are bonded with an adhesive or an adhesive material (such as boule-faced tape). The resin film 25 has a function of an insulator between the metal sheet 13 and the metal foil 24 and a function to protect the metal foil 24 from contamination and breakage.

Due to such a configuration of the IC chip unit 20, it is possible to perform radio communication in the 900 MHz band without reducing a communication distance or increasing a size. For example, when linearly polarized or circularly polarized radio waves are projected from the RW device toward the slot pattern 14, an electric field is generated around the slot pattern 14. The electric field generates opposite (alternating) voltages on a +Y side and a -Y side of the slot pattern 14 in the metal sheet 13. If the IC chip unit 20 is installed across the slot pattern 14, a current flows and the IC chip 21 of the IC chip unit 20 starts.

[Protection sheet]

The package 100 with a radio IC tag according to the present embodiment preferably includes the protection sheet 30 that protects the IC chip unit 20 and the slot pattern 14. The protection sheet 30 may be disposed to cover at least the IC chip unit 20 and the slot pattern 14 disposed on the metal sheet 13. However, the protection sheet 30 is preferably disposed to cover substantially an entire area of the metal sheet 13 as shown in Figs. 1 to 3.

The protection sheet 30 includes a resin sheet such as polyvinyl chloride (PVC), polyethylene terephthalate (PET), or polypropylene (PP), paper, or synthetic paper. A wavelength shortening effect is obtained in accordance with relative permittivity (2 or more) thereof.

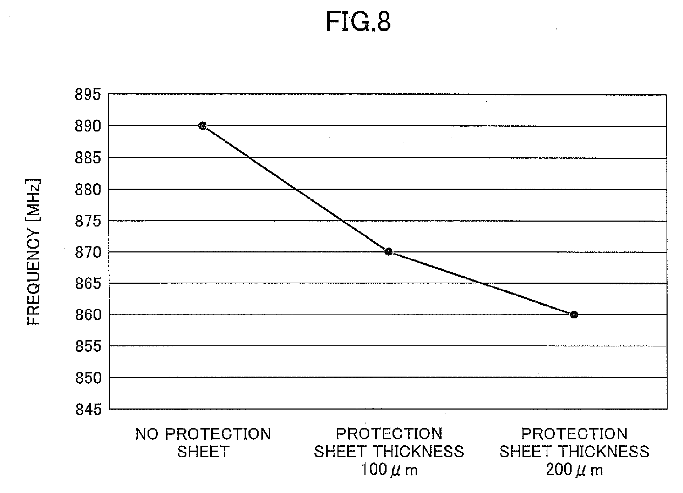

Fig. 8 is a graph showing a change of a frequency peak value in a case without the protection sheet 30 and in a case with the protection sheets 30 (sheet thicknesses are 100 $\mu$m and 200 $\mu$m). As shown in Fig. 8, in the case without the protection sheet 30, the frequency peak value is 890 MHz. By contrast, when the protection sheets 30 with the sheet thickness of 100 $\mu$m and 200 $\mu$m are disposed, corresponding frequency peak values are 870 MHz and 860 MHz. In this case, if a propagation speed of electromagnetic waves is assumed to be $2.99 \times 10^8$ m/s, a wavelength if the protection sheet 30 is not disposed is 337 mm and wavelengths if the protection sheets 30 having the sheet thicknesses of 100 $\mu$m and 200 $\mu$m are disposed are 345 mm and 349 mm.

In other words, when the slot pattern 14 is covered with the protection sheet 30, a dielectric is disposed on both sides of the slot pattern 14, the dielectric being disposed around the slot where a strong electric field is generated, a large wavelength shortening effect is obtained around the slot pattern, a frequency band for communication is shifted to a lower frequency side, and a resonant state is obtained with radio waves of longer wavelengths using the same antenna.

Accordingly, it is possible to reduce a slot length of an antenna and reduce a size of the antenna by setting a frequency band for communication to be shifted to a higher frequency when the protection sheet 30 is not used. Further, when the protection sheet 30 is used as a dielectric for the package 100 with a radio IC tag shifted to a higher frequency side in advance, an antenna capable of communicating using radio waves of a frequency that is actually used is obtained.

Accordingly, even if this is used as a tag in the UHF band having long wavelengths, it is possible to reduce the length of the slot pattern to be less than $\lambda/2$, house the slot pattern in a small PTP sheet 10 for tablets or the like, and stably secure a sufficient communication distance. For example, it is possible to use even the small PTP sheet 10 as an RFID tag in the 900 MHz band having long wavelengths.

By disposing the protection sheet 30, it is possible to protect the slot pattern 14 and the IC chip unit 20 from abrasion and deformation. If the protection sheet 30 is not disposed, there may be peeling, deformation of the slot pattern 14 or the IC chip unit 20 by external force or invasion of a foreign material. However, when the protection sheet 30 is disposed, it is possible to become strong against external physical affecting factors and obtain stable communication characteristics on a long-term basis.

Further, when the slot pattern 14 is formed by punching, if not only the metal sheet 13 but also the resin sheet 11 are punched, strength of the PTP sheet 10 is lowered. However, if the protection sheet 30 is attached to an entire area, it is possible to secure strength of the PTP sheet 10 as a whole.

Although information about a production lot number, an expiration date for use, and cautions when taking a medicine stored in the IC chip 21 of the package 100 with a radio IC tag is to be read using the RW device or the like, a person who takes a medicine does not have the RW device. Accordingly, a print media on which this information is printed is normally delivered to a purchaser separately. Further, since a surface on one side is a metal sheet such as aluminum and a surface on the other side is a resin sheet, it has been difficult to directly print such information on a conventional PTP sheet because of many limitations on a printing method thereof.

Accordingly, visual information may preferably be printed on the protection sheet 30. In this case, it is possible to print information about medicine such as cautions when taking the tablet 200, a number of doses, and an expiration date for use on the protection sheet 30 in advance.

Further, in the same manner, the protection sheet 30 may also preferably be a medium on which writing is possible. In this case, a seller can write information about medicine such as cautions when taking the tablet 200, a number of doses, and date and time.

Further, it is also preferable to print a barcode or a two-dimensional code on the protection sheet 30, the barcode or the two-dimensional code being associated with the information about the above-mentioned medicine.

In this manner, if the visual information, the barcode, or the like is printed or writable on the protection sheet 30, it is preferable to use paper or synthetic paper as the protection sheet 30. Further, a resin sheet for printing in which a surface of the resin sheet is coated with an ink receiving layer may be used as the protection sheet 30.

Further it is also preferable to configure the protection sheet 30 to be a carrier of the IC chip unit 20. In other words, the IC chip unit 20 (the IC chip 21 and the electrode members 22 and 23) and the protection sheet 30 are bonded in advance and this is attached to the PTP sheet 10. Further, the IC chip unit 20 and the protection sheet 30 may preferably be integrally formed. In accordance with this, it is possible to simplify a manufacturing process.

If the protection sheet 30 is used as the carrier of the IC chip unit 20, bonding between the protection sheet 30 and the PTP sheet 10 is preferably peelable using an adhesive or the like. A unit that peels the protection sheet 30 from the PTP sheet 10 is referred to as a peeling mechanism.

In the peeling mechanism, as shown in Fig. 3, for example, preferably, the protection sheet 30 is disposed to cover substantially an entire area of the PTP sheet 10 and a peeling tab 31 is disposed as a grip part at a location outside a frame of an outer shape of the PTP sheet 10. According to this configuration, it is possible to grip the peeling tab 31 to easily peel the protection sheet 30.

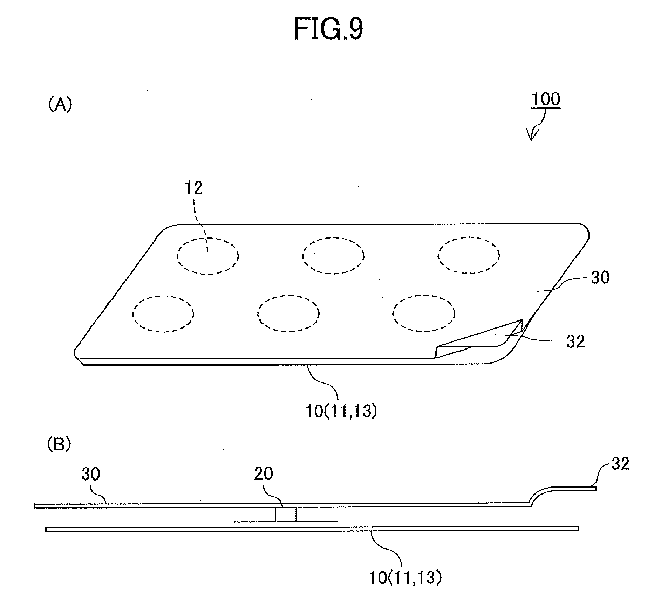

Further, in the peeling mechanism, as shown in Fig. 9(A), for example, preferably, the protection sheet 30 is disposed to cover the entire area of the PTP sheet 10 and a peeling part 32 where the protection sheet 30 is peeled from the metal sheet 13 of the PTP sheet 10 is disposed in a part of a corner field. According to this configuration, it is possible to grip the peeling part 32 to easily peel the protection sheet 30. Fig. 9(B) is a cross-sectional view of the peeling part 32 at a location where it is formed.

In addition, in Fig. 9, the peeling part 32 is disposed by deforming an end of the protection sheet 30 toward a direction separated from the PTP sheet 10. However, a peeling part may be disposed on the PTP sheet 10 such that an end of the PTP sheet 10 is separated from the protection sheet 30.

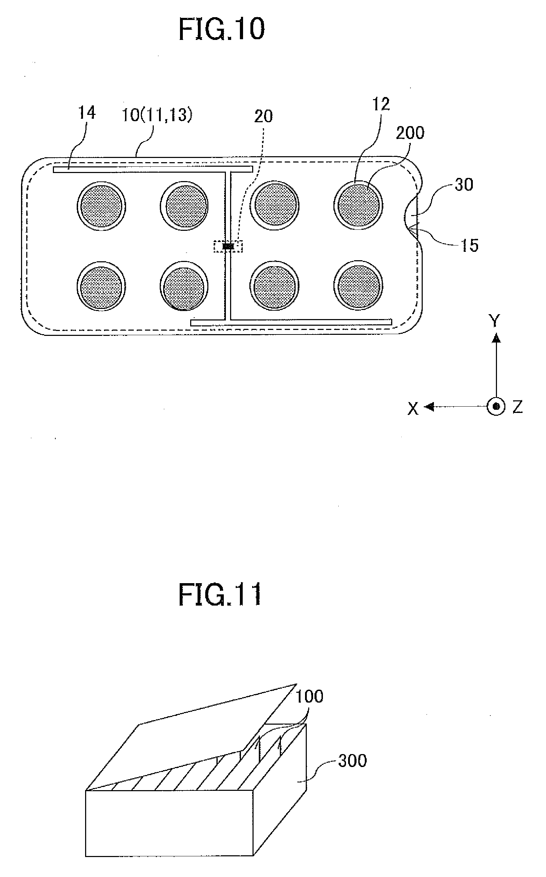

Further, in the peeling mechanism, as shown in Fig. 10, for example, a notch 15 for peeling the protection sheet may be formed on a peripheral part of the PTP sheet 10 such that a part of the protection sheet 30 is exposed from the notch 15. In this case, it is possible to grip the part of the protection sheet 30 exposed from the notch 15 and easily peel the protection sheet 30.

In the package 100 with a radio IC tag, when the tablet 200 is taken, for example, it is possible to grip and peel the protection sheet 30 from the peeling tab 31 (Fig. 3), the peeling part 32 (Fig. 9), or the notch 15 (Fig. 10), and to break the metal sheet 13 of the PTP sheet 10 to open. Accordingly, when the protection sheet 30 is attached to the PTP sheet 10, it is readily possible to perform an opening operation. In addition, if the protection sheet 30 and the IC chip unit 20 are integrally formed or bonded, radio communication is disabled when the protection sheet 30 is peeled and separated from the PTP sheet 10.

In addition, in a configuration where the protection sheet 30 covers only the slot pattern 14 and the IC chip unit 20 without covering the housing portion 12, when the housing portion 12 where the tablet 200 is housed is crushed by the finger, a part of the metal sheet 13 that faces the housing portion 12 is broken by the tablet 200, so that it is possible to take out the tablet 200. In a configuration where the protection sheet 30 covers the housing portion 12, preferably, a part of the protection sheet 30 that faces the housing portion 12 is perforated around the housing portion 12 in advance, such that when the housing portion 12 where the tablet 200 is housed is crushed by the finger, the part of the metal sheet 13 that faces the housing portion 12 and the perforated part of the protection sheet 30 are broken by the tablet 200, thereby taking out the tablet 200.

If a plurality of packages 100 with a radio IC tag overlap and are housed in a package box 300 as shown in Fig. 11, the packages 100 with radio IC tags affect each other as neighboring metal parts. Accordingly, a phenomenon is generated in which a frequency bandwidth where communication is possible using radio IC tags become narrow in comparison with a single state and a communicative distance (communication range) is shifted to a lower side.

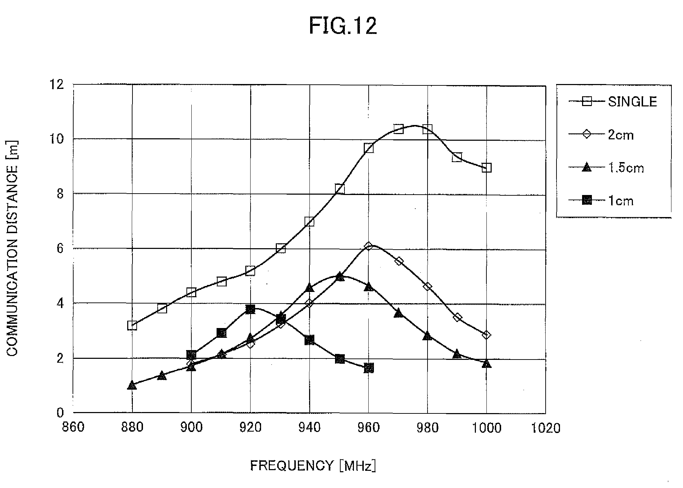

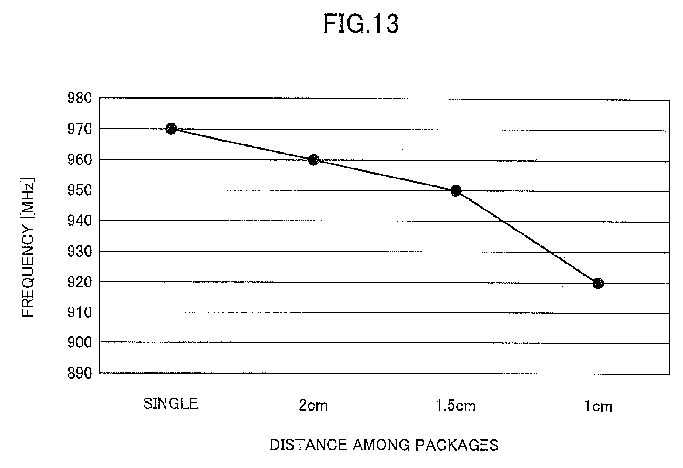

Fig. 12 shows a relationship between a frequency and a communication distance in a case of a single (single unit) package 100 with a radio IC tag and in a case where distances among a plurality of packages with radio IC tags are 1 cm, 1.5 cm, and 2 cm. Further, Fig. 13 shows a relationship with a peak value of a frequency in the case of the single package and in the case of different distances among packages in Fig. 12.

As shown in Fig. 12 and Fig. 13, it is understood that when the distance among the packages 100 with radio IC tags becomes shorter, the frequency is shifted to a lower side. For example, when the packages 100 with radio IC tags are arranged at intervals of 1 cm in the package box 300, if a communication frequency of the packages 100 with radio IC tags is in the 920 MHz band, it is understood that the frequency of the single package with a radio IC tag may be designed to be 970 MHz.

Thus, in the package 100 with a radio IC tag according to the present embodiment, a frequency at which the communication distance is maximized when used in a single state is preferably set in advance to be higher than a communication frequency to be actually used. By setting the frequency in this manner, even when the packages 100 with radio IC tags are packaged very close to each other in the package box 300 or the like, the packages 100 with radio IC tags maintain the communication distance and enable communication. In addition, as shown in Fig. 12, when the package 100 with a radio IC tag is used in the single state, an absolute value of the communication distance at the communication frequency is higher, so that reading is possible without problem in the single state.

(Method for manufacturing package with a radio IC tag)

Next, a method for manufacturing the package 100 with a radio IC tag according to the present embodiment is described. The method for manufacturing the package 100 with a radio IC tag includes at least a step (process step) of forming the slot pattern 14 on the PTP sheet 10, a step (first installation step) of installing the IC chip unit 20 to which two electrode members 22 and 23 are connected on the protection sheet 30, and a step (second installation step) of installing the protection sheet 30 on the PTP sheet 10. In accordance with this, it is possible to easily manufacture the package 100 with a radio IC tag at low cost.

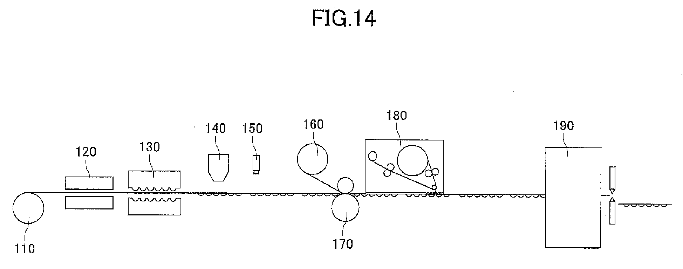

In the following, a specific example of the method for manufacturing the package 100 with a radio IC tag is briefly described with reference to Fig. 14.

(1) A resin sheet 11 is drawn from a long roll (resin sheet roll 110) of a resin sheet, the resin sheet 11 is heated for softening by a heating device 120, and then housing portions 12 are formed by a resin sheet forming device 130.

(2) A tablet insertion device 140 is used to insert tablets 200 into the housing portions 12 of the resin sheet 11.

(3) A tablet inspection device 150 is used to confirm whether the tablets 200 are correctly inserted into the housing portions 12 of the resin sheet 11.

(4) A metal sheet 13 is drawn from a long roll (metal sheet roll 160) for the metal sheet 13, and a metal sheet attachment device 170 is used to attach the metal sheet 13 to the resin sheet 11 in order to seal the housing portions 12. In addition, in the metal sheet 13, a slot pattern 14 having a predetermined shape is formed in advance.

(5) A tag and protection sheet attachment device 180 is used to attach, to the metal sheet 13, the protection sheet 30 to which the IC chip unit 20 is bonded at a predetermined location and carried thereon.

(6) An inspection and information writing device 190 is used to confirm whether the IC chip unit 20 is correctly attached and to write an ID number in the IC chip unit 20.

(7) After being cut into a single package 100 with a radio IC tag, a predetermined number of packages 100 with radio IC tags are put in a package box 300 (Fig. 11).

(8) A RW device is used to read each ID number of the packages 100 with radio IC tags within the package box 300 and to register the ID numbers along with data that specifies a manufacturing date, a factory, and a production line with a database as history information. In addition, the RW device may be any one of a stationary type, a portable type, and a fixed type.

Even if the packages 100 with radio IC tags manufactured in this manner overlap as mentioned above (Fig. 11), it is possible to individually read the ID number of each package 100 with a radio IC tag. Further, even if the package 100 with a radio IC tag and the RW device are separated from each other by a predetermined distance, it is possible to read the ID number of each package 100 with a radio IC tag.

According to the package with a radio IC tag in the present embodiment described above, in a technique of processing a part of a metal foil on the PTP sheet for packaging tablets or the like and using the part as an antenna of the radio IC tag, it is possible to stably secure a sufficient communication distance if the package 100 with a radio IC tag is used as a radio IC tag in the UHF band (such as the 900 MHz band) having relatively long wavelengths and to enable communication even if PTP sheets are collectively housed.

Accordingly, manufactures, wholesalers, drugstores, and hospitals can perform inventory management of packages with radio IC tags correctly, simply, and in a short time. Further, by associating ID numbers with a database of medicine, it is possible to prevent administration of an erroneous medicine to patients.

Further, by disposing the protection sheet, it is possible to reduce the slot length and obtain stable communication characteristics on a long-term basis. Further, predetermined information is printed or written on the protection sheet, so that it is possible to prevent a recipient from taking an erroneous medicine.

Examples

<Example 1>

The package 100 with a radio IC tag according to the present invention is evaluated as follows.

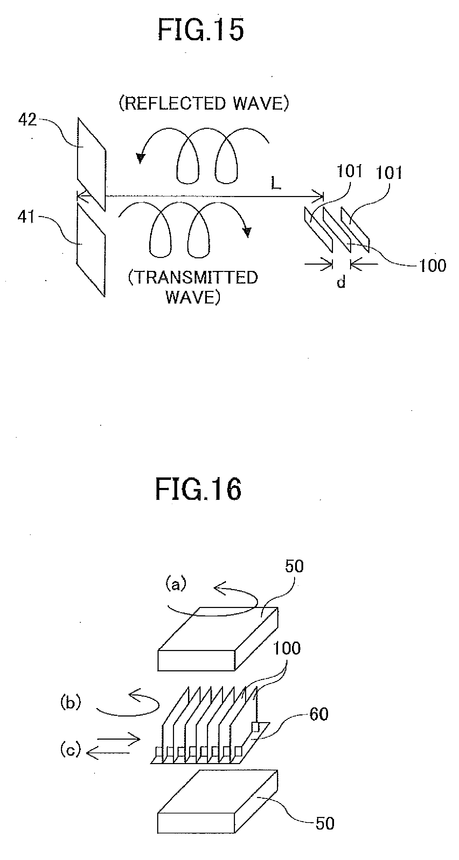

Fig. 15 is an illustration of an evaluation method in Example 1. In the evaluation, the package 100 with a radio IC tag to be evaluated is disposed within an anechoic chamber and measured. Basically, it is desirable to directly obtain a communication distance using a device shown in Fig. 15. However, this is difficult because a huge experimental device is requited due the communication distance leading to several meters. Accordingly, in this Example, Formula (1) to be described below is used to dispose an object to be measured in a location at a predetermined distance from a transmission antenna, a transmission output in a communication limit of each frequency is obtained, and from a relationship between these two, a communication distance when the device operates at its maximum output is calculated.

An installation position of the package 100 with a radio IC tag is set such that the package 100 with a radio IC tag directly faces an antenna 40 (transmission antenna 41 and reception antenna 42).

On both sides of a single package 100 with a radio IC tag, a dummy sheet 101 is disposed in parallel at predetermined intervals d on the assumption that packages 100 with radio IC tags overlap. While the dummy sheet 101 does not include the slot pattern 14 or the IC chip unit 20, a member with the same material, the same shape, and the same size as in the package 100 with a radio IC tag to be measured is used.

A distance from a circularly polarized antenna output device (transmission antenna 41) to the package 100 with a radio IC tag is L within a measurement device shown in Fig. 15. In the antenna 40, distances L from the package 100 with a radio IC tag to the transmission antenna 41 and to the reception antenna 42 are preferably equal. Further, the same antenna may be used for the transmission antenna 41 and the reception antenna 42.

An output value Pmin which is minimum among output values in which communication with the IC chip 21 of the package 100 with a radio IC tag is possible in each frequency is measured at the distance L while changing the frequency of radio waves to be output and the output.

Then, if a limit value of the communication distance with the package 100 with a radio IC tag is Lmax when a maximum output of the measurement device is Pmax (Effective Isotropic Radiated Power (EIRP)), a relationship between the distance in response to the maximum output and the distance in response to the minimum output is expressed by the following Formula (1).

[Formula (1)]

$$Lmax = L \times 10^{\{(Pmax[dBm]-Pmin[dBm])/20\}} \quad \dots \quad (1)$$

The distance L is a fixed value determined when the measurement device is disposed. It is possible to calculate a maximum value Lmax of the communication distance in each frequency by inputting, to the above-mentioned Formula (1), the maximum output Pmax=35dBm in the measurement device and the output value Pmin in each frequency. In addition, it is possible to obtain the above-mentioned Formula (1) from the Friis transmission equation.

Table 1 shows an evaluation result in Example 1. In addition, the slot patterns 14 (Fig. 4) suitable for communication in the 920 MHz band are selected depending on a sheet size of the PTP sheet 10.

[Table 1]

| | Sheet size | Slot pattern | Protection sheet | Communicating distance (Lmax) in 920 MHz band | | | Communication distance peak frequency (no dunny sheet) |
|---|---|---|---|---|---|---|---|
| | | | | No dummy sheet | d=20 mm | d=10 mm | |
| Example 1a | 100×35 mm | a | Yes | 7.0 m | 3.8 m | 4.2 m | 970 MHz |
| Example 1b | 90×35 mm | b | Yes | 5.7 m | 2.8 m | 3.0 m | 970 MHz |
| Example 1c | 80×35 mm | C | Yes | 5.3 m | 2.6 m | 3.8 m | 970 MHz |
| Example 1d | 80×35 mm | d | Yes | 6.5 m | 3.6 m | 2.6 m | 960 MHz |
| Example 1e | 80×35 mm | e | Yes | 6.3 m | 6.2 m | 3.1 m | 980 MHz |
| Comparative example 1f | 80×35 mm | f | Yes | 6.0 m | 3.0 m | - | 950 MHz |

Example 1a uses the slot pattern 14 with a step-like shape having four bent parts shown in Fig. 4(a). Example 1b uses the slot pattern 14 with a step-like shape having two bent parts shown in Fig. 4(b). Example 1c uses the slot pattern 14 with a step-like shape having two bent parts shown in Fig. 4 (c).

Further, Example 1d uses the slot pattern 14 which is U-shaped shown in Fig. 4(d). Example 1e uses the slot pattern 14 with a gate-like shape shown in Fig. 4 (e).

As shown in Table 1, in Examples 1a to 1e, communication is confirmed to be sufficiently possible even in a case of wide intervals d=20 mm and in a case of narrow intervals d=10 mm while the communication distance is reduced in comparison with a case without a dummy sheet.

By contrast, while Comparative example 1f uses the slot pattern 14 which is U-shaped in the same manner as in Fig. 4(d), the ends of the slot pattern 14 shown in Fig. 4(f) are not present in the corner fields of the PTP sheet 10.

In this Comparative example 1f, communication is impossible in the case of narrow intervals d=10 mm. This is considered to be because the ends of the slot patterns 14 in Examples 1a to 1e are located in the corner fields of the PTP sheet 10, while the ends of the slot pattern 14 in Comparative example 1f are not located in the corner fields of the PTP sheet 10.

This Example 1 confirms that the ends of the slot pattern 14 are preferably located in the corner fields and that the package 100 with a radio IC tag according to the above embodiment can perform communication even if packages 100 with radio IC tags overlap.

<Example 2>

Next, a reading evaluation of the package 100 with a radio IC tag is conducted as follows when packages 100 with radio IC tags according to the present invention are arranged.

Fig. 16 is an illustration of an evaluation method in Example 2. The evaluation uses SKY900BLU, a mobile reader in the 920 MHz band manufactured by CEYON TECHNOLOGY Co., Ltd., as a reader/writer (RW) device 50 (only the reader function is used here). In addition, Fig. 16 shows a case where the RW device 50 is set above the packages 100 with radio IC tags and a case where the RW device 50 is set below the packages 100 with radio IC tags altogether.

Seven packages 100 with radio IC tags are arranged and fixed at intervals of 1 cm on a stand 60 made of cardboard as shown in Fig. 16.

An output of the RW device 50 is 40 mW and a detection frequency of the IC chips of the packages 100 with radio IC tags is examined in three methods of (a), (b), and (c) shown in Fig. 16.

(a) The packages 100 with radio IC tags are fixed on the stand 60, and the RW device 50 is moved in a circle above the packages 100 with radio IC tags.
(b) The RW device 50 is fixed above the packages 100 with radio IC tags, and the packages 100 with radio IC tags fixed on the stand 60 are moved in a circle.
(c) The RW device 50 is fixed below the packages 100 with radio IC tags, and the packages 100 with radio IC tags fixed on the stand 60 are moved in parallel.

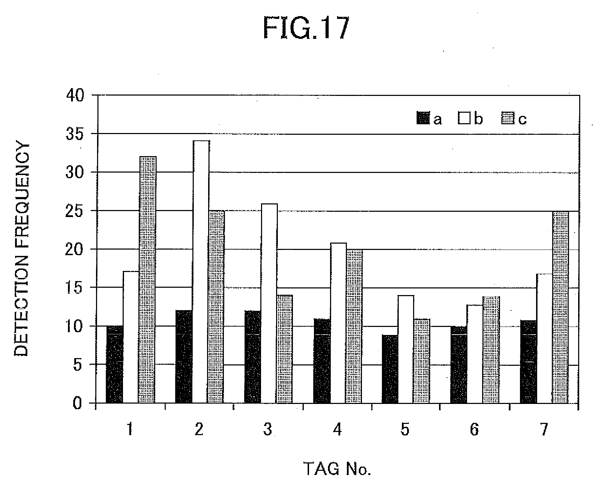

Fig. 17 shows a result. The "DETECTION FREQUENCY" shown in Fig. 17 indicates a number of times the tag (package 100 with a radio IC tag) is recognized in a predetermined time (30 seconds here) and communication is possible and indicates a degree of communication availability when tags are simultaneously present. This Example confirms that any method can detect all of the seven PTP sheets with the tags arranged at intervals of 1 cm, thereby confirming effectiveness of the present invention.

While the above embodiment is a preferable example of implementation of the present invention, the present invention is not limited to this. Various modifications and implementations may be made without departing from the scope of the present invention.

For example, in the embodiment, tablets (tablets) packaged in the PTP sheet are medicine. However, the present invention is not limited to this. What is packaged may be food, for example.

The present application is based on and claims the benefit of priorities of Japanese Priority Application No. 2013-165927 filed on August 9, 2013 and Japanese Priority Application No. 2014-116932 filed on June 5, 2014, the entire contents of which are hereby incorporated by reference.

EXPLANATION OF REFERENCE NUMERALS

| | |
|---|---|
| 10 | PTP sheet (package unit) |
| 11 | resin sheet |
| 12 | housing portion |
| 13 | metal sheet |
| 14 | slot pattern |
| 15 | notch |
| 20 | IC chip unit |
| 21 | IC chip |
| 22 | electrode member |
| 23 | electrode member |
| 24 | metal foil |
| 25 | resin film |
| 30 | protection sheet |
| 31 | peeling tab |
| 32 | peeling part |
| 40 | antenna |
| 41 | transmission antenna |
| 42 | reception antenna |

50      RW device
60      stand
100     package with a radio IC tag
101     dummy sheet
110     resin sheet roll
120     heating device
130     resin sheet forming device
140     tablet insertion device
150     tablet inspection device
160     metal sheet roll
170     metal sheet attachment device
180     tag and protection sheet attachment device
190     inspection and information writing device 190
200     tablet
300     package box

**Claims**

1.  A package with a radio IC tag, comprising:

    a package unit including a metal sheet and a resin sheet, the metal sheet having a predetermined slot pattern formed therein; and
    an IC chip unit including an IC chip and an electrode member, the electrode member supplying electric power to the IC chip, wherein
    an end of the slot pattern is disposed in a corner field of the package unit.

2.  The package with a radio IC tag as claimed in claim 1, further comprising:

    a protection sheet, wherein the slot pattern and the IC chip unit are covered with the protection sheet from a metal sheet side.

3.  The package with a radio IC tag as claimed in claim 1, wherein a frequency at which a communication distance of the package with a radio IC tag in a single state is maximized is set to be higher than a communication frequency of actual use.

4.  The package with a radio IC tag as claimed in claim 3, wherein if a plurality of the packages with radio IC tags are housed at predetermined intervals, a frequency at which a communication distance of each of the plurality of the packages with a radio IC tag is maximized is set to be close to the communication frequency of actual use.

5.  The package with a radio IC tag as claimed in claim 2, wherein substantially an entire area of the package unit is covered with the protection sheet from a metal sheet side.

6.  The package with a radio IC tag as claimed in claim 2, further comprising:

    a peeling mechanism that can peel the protection sheet from the package unit.

7.  The package with a radio IC tag as claimed in claim 2, wherein predetermined information can be printed or written on the protection sheet.

8.  The package with a radio IC tag as claimed in claim 1, wherein
    the resin sheet has a concave shape to house a tablet, and
    in the package unit, the resin sheet and the metal sheet are attached to each other.

9.  The package with a radio IC tag as claimed in claim 1, wherein the slot pattern has a groove width of at least 0.5 mm.

10. The package with a radio IC tag as claimed in claim 1, wherein the IC chip unit includes
    two electrode members installed across the slot pattern in a width direction of the slot pattern, the two electrode members each being installed on a surface of the metal sheet via an insulating member; and
an IC chip to which electric power is supplied by the two electrode members.

11. A method for manufacturing the package with a radio IC tag as claimed in claim 2, the method comprising at least:

a process step of forming the slot pattern on the slot pattern on the metal sheet;
a first installation step of installing the IC chip unit on the protection sheet; and
a second installation step of installing the protection sheet on the package unit.

# FIG.1

# FIG.2

# FIG.3

# FIG.4

(a)

(b)

(c)

(d)

(e)

(f)

(g)

# FIG.5

# FIG.6

# FIG.7

EP 3 032 649 A1

# FIG.8

EP 3 032 649 A1

# FIG.9

(A)

100

12

30

32

10(11,13)

(B)

30    20    32

10(11,13)

19

# FIG.10

# FIG.11

FIG.12

# FIG.13

DISTANCE AMONG PACKAGES

FIG.14

# FIG.15

(REFLECTED WAVE)

42

(TRANSMITTED WAVE)

101  101

L

100

d

41

# FIG.16

50

(a)

100

(b)

60

(c)

50

# FIG.17

## INTERNATIONAL SEARCH REPORT

| | International application No. |
|---|---|
| | PCT/JP2014/070601 |

| | |
|---|---|
| A. CLASSIFICATION OF SUBJECT MATTER | |
| *H01Q13/10*(2006.01)i, *B65D75/32*(2006.01)i, *G06K19/00*(2006.01)i, *G06K19/07*(2006.01)i, *G06K19/077*(2006.01)i | |

According to International Patent Classification (IPC) or to both national classification and IPC

| B. FIELDS SEARCHED |
|---|
| Minimum documentation searched (classification system followed by classification symbols) |
| H01Q13/10, B65D75/32, G06K19/00, G06K19/07, G06K19/077 |

Documentation searched other than minimum documentation to the extent that such documents are included in the fields searched
| Jitsuyo Shinan Koho | 1922–1996 | Jitsuyo Shinan Toroku Koho | 1996–2014 |
|---|---|---|---|
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2008/000279 A1 (AIDA CENTRE, S.L.), 03 January 2008 (03.01.2008), description, page 7, lines 23 to 27; page 8, lines 5 to 12; fig. 3 (Family: none) | 1–11 |
| Y | JP 2007-060407 A (Hitachi, Ltd.), 08 March 2007 (08.03.2007), claims 1, 2, 12, 13; paragraph [0032]; fig. 7 & US 2007/0046466 A1 & EP 1758050 A1 | 1–11 |
| A | JP 2009-269637 A (Oshio Sangyo Kabushiki Kaisha, Fine Label Inc.), 19 November 2009 (19.11.2009), entire text; all drawings (Family: none) | 1–11 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 November, 2014 (04.11.14) | 18 November, 2014 (18.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/070601

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-037653 A (Ricoh Co., Ltd., Smart Co., Ltd.), 21 February 2013 (21.02.2013), entire text; all drawings (Family: none) | 1-11 |
| A | JP 2010-534363 A (Boehringer Ingelheim International GmbH), 04 November 2010 (04.11.2010), entire text; all drawings & JP 5357874 B2 & US 2010/0182131 A1 & US 2013/0162408 A1 & WO 2009/013189 A1 & DE 102007034155 A1 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007060407 A
- JP 2013165927 A
- JP 2014116932 A